(19) Europäisches Patentamt / European Patent Office / Office européen des brevets

(11) **EP 4 761 148 A1**

(12) **EUROPEAN PATENT APPLICATION**
published in accordance with Art. 153(4) EPC

(43) Date of publication:
**17.06.2026 Bulletin 2026/25**

(21) Application number: **24870015.5**

(22) Date of filing: **19.07.2024**

(51) International Patent Classification (IPC):
**H04B 17/15** (2015.01)

(52) Cooperative Patent Classification (CPC):
**H04B 10/079; H04B 17/15**

(86) International application number:
**PCT/CN2024/106389**

(87) International publication number:
**WO 2025/066460 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311292193**
**12.07.2024 CN 202410941831**

(71) Applicant: HUAWEI TECHNOLOGIES CO., LTD.
**Shenzhen 518129 (CN)**

(72) Inventors:
• LIU, Xiang
  **Shenzhen, Guangdong 518129 (CN)**
• FAN, Qirui
  **Shenzhen, Guangdong 518129 (CN)**

(74) Representative: **Pfenning, Meinig & Partner mbB Patent- und Rechtsanwälte Theresienhöhe 11a 80339 München (DE)**

(54) **METHOD AND APPARATUS FOR DETERMINING PERFORMANCE OF COHERENT TRANSMITTER, AND SYSTEM, DEVICE AND MEDIUM**

(57) The present disclosure provides a method, an apparatus, and a system for determining performance of a coherent transmitter, a device, and a medium, and pertains to the field of coherent communication technologies. The method includes: obtaining a plurality of digital signals carried in a dual-polarization optical signal from the coherent transmitter; performing noise search based on the plurality of digital signals, to obtain first power of additive white Gaussian noise added to the plurality of digital signals at a bit error rate threshold; obtaining second power of additive white Gaussian noise added to an ideal signal at the bit error rate threshold, where the ideal signal is an undistorted signal determined based on the plurality of digital signals; and then determining the performance of the coherent transmitter based on the first power and the second power. According to the solutions of the present disclosure, using a bit error rate as a constraint can accurately measure the performance of the coherent transmitter .

Obtain a plurality of digital signals carried in a dual-polarization optical signal from a coherent transmitter, where the plurality of digital signals are dual-polarization in-phase and quadrature signals — 301

Perform noise search based on the plurality of digital signals, to obtain first power of additive white Gaussian noise added to the plurality of digital signals at a bit error rate threshold — 302

Obtain second power of additive white Gaussian noise added to an ideal signal at the bit error rate threshold — 303

Determine performance of the coherent transmitter based on the first power and the second power — 304

FIG. 3

## Description

The present disclosure claims priorities to Chinese Patent Application No. 202311292193.8, filed on September 28, 2023, and entitled "METHOD, APPARATUS, AND SYSTEM FOR DETERMINING PERFORMANCE OF COHERENT TRANSMITTER, DEVICE, AND MEDIUM" and to Chinese Patent Application No. 202410941831.2, filed on July 12, 2024, and entitled "METHOD, APPARATUS, AND SYSTEM FOR DETERMINING PERFORMANCE OF COHERENT TRANSMITTER, DEVICE, AND MEDIUM", both of which are incorporated herein by reference in their entireties.

## TECHNICAL FIELD

The present disclosure relates to the field of coherent communication technologies, and in particular, to a method, an apparatus, and a system for determining performance of a coherent transmitter, a device, and a medium.

## BACKGROUND

In a high-speed dense wavelength-division multiplexing (dense wavelength-division multiplexing, DWDM) system, a coherent transmitter is used to transmit a signal, and performance of the coherent transmitter directly affects whether the DWDM system can normally transmit data. Therefore, the performance of the coherent transmitter needs to be determined.

Currently, in the industry, an error vector magnitude (error vector magnitude, EVM) is used to measure the performance of the coherent transmitter. When degradation of the coherent transmitter is caused only due to additive white Gaussian noise (additive white Gaussian noise, AWGN), the performance of the coherent transmitter can be accurately measured based on the EVM. However, in the coherent transmitter, other interference that causes degradation of the coherent transmitter often occurs, and the other interference is not the AWGN, for example, is inter-modulation symbol interference and laser phase noise. In this case, if the EVM is still used to measure the performance of the coherent transmitter, the measurement may be inaccurate.

## SUMMARY

The present disclosure provides a method, an apparatus, and a system for determining performance of a coherent transmitter, a device, and a medium, to improve accuracy of determining the performance of the coherent transmitter. Technical solutions are as follows:
According to a first aspect, the present disclosure provides a method for determining performance of a coherent transmitter. The method includes: obtaining a plurality of digital signals carried in a dual-polarization optical signal from the coherent transmitter, where the plurality of digital signals are dual-polarization in-phase and quadrature signals; performing noise search based on the plurality of digital signals, to obtain first power of additive white Gaussian noise added to the plurality of digital signals at a bit error rate threshold; obtaining second power of additive white Gaussian noise added to an ideal signal at the bit error rate threshold, where the ideal signal is an undistorted signal determined based on the plurality of digital signals; and determining the performance of the coherent transmitter based on the first power and the second power.

In the solution shown in the present disclosure, when the performance of the coherent transmitter is determined, at the bit error rate threshold, higher power of the additive white Gaussian noise added to the plurality of digital signals indicates a smaller impairment of a signal transmitted by the coherent transmitter; and on the contrary, lower power of the additive white Gaussian noise added to the plurality of digital signals indicates a larger impairment of a signal transmitted by the coherent transmitter. This is equivalent to directly measuring the performance of the coherent transmitter based on a bit error rate.

In an optional manner, the determining the performance of the coherent transmitter based on the first power and the second power includes: determining the performance of the coherent transmitter based on the first power, the second power, and noise of the coherent receiver front end.

In the solution shown in the present disclosure, the noise of the coherent receiver front end is further considered, and impact of the noise of the coherent receiver front end on the determined performance of the coherent transmitter is eliminated, so that the performance of the coherent transmitter is accurately evaluated.

In an optional manner, the performing noise search based on the plurality of digital signals, to obtain the first power of the additive white Gaussian noise added to the plurality of digital signals at the bit error rate threshold includes: performing pulse shaping and matched filtering on the plurality of digital signals to obtain matched filtered signals; and performing noise search based on the matched filtered signals to obtain the first power of additive white Gaussian noise added to the matched filtered signals at the bit error rate threshold.

In the solution shown in the present disclosure, before noise search is performed, pulse shaping and filtering are performed on the plurality of digital signals, so that noise can be suppressed, and the determined performance of the coherent transmitter is more accurate.

In an optional manner, the performing noise search based on the matched filtered signals to obtain the first power of the additive white Gaussian noise added to the matched filtered signals at the bit error rate threshold includes: adding the additive white Gaussian noise to the matched filtered signals, to obtain signals to which the additive white Gaussian noise is added; performing equalization on the signals to which the additive white Gaussian noise is added, to obtain equalized signals; and determining, based on the equalized signals, the first power of the additive white Gaussian noise added to the matched filtered signals at the bit error rate threshold.

In an optional manner, before pulse shaping and matched filtering are performed on the plurality of digital signals, low-pass filtering is performed on the plurality of digital signals based on a bandwidth of the coherent receiver front end, so that a bandwidth limit of the coherent receiver front end can be simulated.

In an optional manner, the obtaining the plurality of digital signals carried in the dual-polarization optical signal from the coherent transmitter includes: obtaining a plurality of analog signals carried in the dual-polarization optical signal from the coherent transmitter; performing low-pass filtering on the plurality of analog signals, to obtain low-pass filtered analog signals, where a bandwidth for performing low-pass filtering is determined based on a bandwidth of a coherent receiver front end; and performing analog-to-digital conversion on the low-pass filtered analog signals, to obtain the plurality of digital signals.

In the solution shown in the present disclosure, after the plurality of analog signals carried in the dual-polarization optical signal from the coherent transmitter are obtained, low-pass filtering is performed on the plurality of analog signals based on the bandwidth of the coherent receiver front end, and then analog-to-digital conversion is performed to convert the plurality of analog signals into the plurality of digital signals, so that a bandwidth limit of the coherent receiver front end can be simulated.

In an optional manner, the determining the performance of the coherent transmitter based on the first power, the second power, and the noise of the coherent receiver front end includes: determining a transmitter constellation closure (transmitter constellation closure, TCC) penalty according to a formula $TCC = 10 \log_{10} \left( \dfrac{\sigma_{ideal}^2}{\sigma_{TUT}^2 + \sigma_s^2} \right)$, where *TCC* represents the transmitter constellation closure penalty, $\sigma_{TUT}^2$ represents the first power, $\sigma_{ideal}^2$ represents the second

power, $\sigma_s^2$ represents power of the noise of the coherent receiver front end, and the transmitter constellation closure penalty represents the performance of the coherent transmitter.

In the solution shown in the present disclosure, when the performance of the coherent transmitter is computed, margin noise that can be further added to the plurality of digital signals when the bit error rate threshold is reached is considered, so that the performance of the coherent transmitter can be evaluated based on the margin noise.

In an optional manner, the method further includes: determining power of the plurality of digital signals and power of the matched filtered signals; and the determining the performance of the coherent transmitter based on the first power, the second power, and the noise of the coherent receiver front end includes: determining a transmitter constellation closure penalty according to a formula $TCC = 10 \log_{10} \left( \dfrac{\sigma_{ideal}^2}{\sigma_{TUT}^2 + \sigma_s^2} \right) + 10 \log_{10} \left( \dfrac{p_{unfiltered}}{p_{filtered}} \right)$, where *TCC* represents the transmitter constellation closure penalty, $\sigma_{TUT}^2$ represents the first power, $\sigma_{ideal}^2$ represents the second

power, $\sigma_s^2$ represents power of the noise of the coherent receiver front end, $p_{unfiltered}$ represents the power of the plurality of digital signals, $p_{filtered}$ represents the power of the matched filtered signals, and the transmitter constellation closure penalty represents the performance of the coherent transmitter.

In the solution shown in the present disclosure, when the performance of the coherent transmitter is computed, in addition to the margin noise that can be further added to the plurality of digital signals when the bit error rate threshold is reached, a ratio of power of an unfiltered signal to power of a filtered signal is considered. When the ratio is large, it indicates that a received signal has a large impairment. When the ratio is small, it indicates that a received signal has a small impairment. A bandwidth of a signal transmitted by the coherent transmitter is evaluated based on the ratio, it can be learned that not only the margin noise is considered, but also the bandwidth of the signal transmitted by the coherent transmitter is considered, so that the performance of the coherent transmitter can be more accurately evaluated.

In an optional manner, the dual-polarization optical signal includes at least $1 \times 10^5$ symbols at the bit error rate threshold. In this way, the performance of the coherent transmitter can be accurately determined by using sufficient symbols.

In an optional manner, the determining the performance of the coherent transmitter based on the first power, the second power, and the noise of the coherent receiver front end includes: determining a first sensitivity penalty of the coherent transmitter at the bit error rate threshold based on the first power, the second power, and the noise of the coherent receiver front end; and the method further includes: performing noise search based on the plurality of digital signals, to obtain third power of additive white Gaussian noise added to the plurality of digital signals at at least one target bit error rate; obtaining fourth power of additive white Gaussian noise added to the ideal signal at the at least one target bit error rate; for a first target bit error rate in the at least one target bit error rate, determining a second sensitivity penalty of the coherent transmitter at the first target bit error rate based on third power and fourth power that correspond to the first target bit error rate and the noise of the coherent receiver front end; and determining target performance of the coherent transmitter based on a first sensitivity penalty of the coherent transmitter and a second sensitivity penalty of the coherent transmitter at the at least one target bit error rate.

In the solution shown in the present disclosure, the target performance is comprehensive performance of the coherent transmitter. A plurality of sensitivity penalties can be determined based on a plurality of bit error rates, and the performance of the coherent transmitter can be determined based on the plurality of sensitivity penalties, so that the performance of the coherent transmitter can be more accurately measured.

In an optional manner, the determining the performance of the coherent transmitter based on the first power, the second power, and the noise of the coherent receiver front end includes: determining a transmitter constellation closure penalty of the coherent transmitter based on the first power, the second power, and the noise of the coherent receiver front end; and the method further includes: obtaining a bit error rate of the plurality of digital signals at at least one virtual noise signal-to-noise ratio; and determining the target performance of the coherent transmitter based on the obtained bit error rate and the transmitter constellation closure penalty.

In the solution shown in the present disclosure, determining the performance of the coherent transmitter based on the virtual noise signal-to-noise ratio and the transmitter constellation closure penalty is equivalent to multi-dimensional evaluation of the performance of the coherent transmitter, and can more accurately measure the performance of the coherent transmitter.

In an optional manner, the determining the performance of the coherent transmitter based on the first power and the second power includes: determining, based on the first power and the second power, a first relative virtual noise signal-to-noise ratio of the coherent transmitter at the bit error rate threshold; and the method further includes: performing noise search based on the plurality of digital signals, to obtain third power of additive white Gaussian noise added to the plurality of digital signals at at least one target bit error rate; obtaining fourth power of additive white Gaussian noise added to the ideal signal at the at least one target bit error rate; for a first target bit error rate in the at least one target bit error rate, determining a second relative virtual noise signal-to-noise ratio of the coherent transmitter at the first target bit error rate based on third power and fourth power that correspond to the first target bit error rate; and determining target performance of the coherent transmitter based on a first relative virtual noise signal-to-noise ratio of the coherent transmitter and a second relative virtual noise signal-to-noise ratio of the coherent transmitter at the at least one target bit error rate.

In the solution shown in the present disclosure, the target performance is comprehensive performance of the coherent transmitter. A plurality of relative virtual noise signal-to-noise ratios can be directly determined based on a plurality of bit error rates, and performance of the coherent transmitter can be determined based on the plurality of relative virtual noise signal-to-noise ratios, so that the performance of the coherent transmitter can be more accurately measured.

According to a second aspect, the present disclosure provides a method for determining performance of a coherent transmitter. The method includes: obtaining a plurality of digital signals carried in a dual-polarization optical signal from the coherent transmitter, where the plurality of digital signals are dual-polarization in-phase and quadrature signals; obtaining a bit error rate of the plurality of digital signals at at least one virtual noise signal-to-noise ratio; and determining the performance of the coherent transmitter based on the obtained bit error rate.

In the solution shown in the present disclosure, the performance of the coherent transmitter can also be determined by measuring a bit error rate based on a virtual noise signal-to-noise ratio.

According to a third aspect, the present disclosure provides an apparatus for determining performance of a coherent transmitter. The apparatus has a function of implementing the first aspect and the optional implementations of the first aspect. The apparatus includes at least one module, and the at least one module is configured to implement the method for determining performance of a coherent transmitter according to the first aspect and the optional implementations of the first aspect.

In some embodiments, the module in the apparatus for determining performance of a coherent transmitter is implemented by software, and the module in the apparatus is a program module. In some other embodiments, the module in the apparatus is implemented by hardware or firmware.

According to a fourth aspect, the present disclosure provides an apparatus for determining performance of a coherent transmitter. The apparatus has a function of implementing the second aspect. The apparatus includes at least one module, and the at least one module is configured to implement the method for determining performance of a coherent transmitter according to the second aspect.

In some embodiments, the module in the apparatus for determining performance of a coherent transmitter is implemented by software, and the module in the apparatus is a program module. In some other embodiments, a module in the apparatus is implemented by hardware or firmware.

According to a fifth aspect, the present disclosure provides a compute device, where the compute device includes a processor and a memory, the memory stores computer instructions, and the processor executes the computer instructions, to implement the method for determining performance of a coherent transmitter according to the first aspect and the optional implementations of the first aspect, or the method for determining performance of a coherent transmitter according to the second aspect.

According to a sixth aspect, the present disclosure provides a computer-readable storage medium. The computer-readable storage medium stores computer instructions. When the computer instructions in the computer-readable storage medium are executed by a compute device, the compute device is caused to perform the method for determining performance of a coherent transmitter according to the first aspect and the optional implementations of the first aspect, or the method for determining performance of a coherent transmitter according to the second aspect.

According to a seventh aspect, the present disclosure provides a computer program product including instructions. When the computer program product runs on a compute device, the compute device is caused to perform the method for determining performance of a coherent transmitter according to the first aspect and the optional implementations of the first aspect, or the method for determining performance of a coherent transmitter according to the second aspect.

According to an eighth aspect, the present disclosure provides a system for determining performance of a coherent transmitter, where the system includes a coherent receiving apparatus and the apparatus for determining performance of a coherent transmitter according to the fourth aspect and the optional implementations of the fourth aspect, or includes a coherent receiving apparatus and the apparatus for determining performance of a coherent transmitter according to the fourth aspect.

The coherent receiving apparatus is configured to coherently receive a dual-polarization optical signal from the coherent transmitter, to obtain a plurality of analog signals included in the dual-polarization optical signal, and output the plurality of analog signals to the apparatus, where the plurality of analog signals are converted into a plurality of digital signals through analog-to-digital conversion.

According to a ninth aspect, the present disclosure provides a communication system. The system includes a coherent transmitter configured to transmit a dual-polarization optical signal, a coherent receiving apparatus, and the apparatus for determining performance of a coherent transmitter according to the fourth aspect and the optional implementations of the fourth aspect, or the apparatus for determining performance of a coherent transmitter according to the fourth aspect.

## BRIEF DESCRIPTION OF DRAWINGS

FIG. 1 is a diagram of a system architecture of a communication system according to an example embodiment of the present disclosure;

FIG. 2 is a diagram of an architecture of a system for determining performance of a coherent transmitter according to an example embodiment of the present disclosure;

FIG. 3 is a schematic flowchart of a method for determining performance of a coherent transmitter according to an example embodiment of the present disclosure;

FIG. 4 is a block diagram of a procedure of determining performance of a coherent transmitter according to an example embodiment of the present disclosure;

FIG. 5 is a block diagram of a procedure of determining performance of a coherent transmitter according to another example embodiment of the present disclosure;

FIG. 6 is a diagram of a correspondence between a virtual noise signal-to-noise ratio and a bit error rate according to an example embodiment of the present disclosure;

FIG. 7 is a diagram of interpolation between a virtual noise signal-to-noise ratio and a bit error rate according to an example embodiment of the present disclosure;

FIG. 8 is a diagram of measuring performance of a coherent transmitter based on a virtual noise signal-to-noise ratio according to an example embodiment of the present disclosure;

FIG. 9 is a diagram of simulation of a bit error rate and an optical signal-to-noise ratio (optical signal-to-noise ratio, OSNR) according to an example embodiment of the present disclosure;

FIG. 10 is a diagram of simulation of a quantity of symbols according to an example embodiment of the present disclosure; and

FIG. 11 is a diagram of a structure of a compute device according to an example embodiment of the present disclosure.

## DESCRIPTION OF EMBODIMENTS

To make the objectives, technical solutions, and advantages of the present disclosure clearer, the following further describes implementations of the present disclosure in detail with reference to the accompanying drawings.

For a high-speed DWDM system, an accurate metric needs to be defined to evaluate performance of a coherent transmitter, which may also be considered as evaluating quality of the coherent transmitter. A bit error rate (bit error rate, BER) is a direct indicator for measuring the performance of the coherent transmitter. However, previously, because a BER threshold is low, a quantity of bits that need to be transmitted for bit error rate statistics exceeds a buffer depth of a real-time sampling oscilloscope, and performance measurement depends on an indirect performance indicator like an EVM or a signal-to-noise ratio (signal-to-noise ratio, SNR). The EVM uses a root mean square (root mean square, RMS) of errors of a constellation diagram as a standard deviation of AWGN to approximately represent the bit error rate. When degradation of the coherent transmitter is caused only due to the AWGN, the performance of the coherent transmitter is accurately measured based on the EVM. However, in a high-speed coherent transmitter, various non-AWGN impairments exist, for example, in-phase quadrature (in-phase quadrature, IQ) imbalance, IQ skew (skew), a transmit-end bandwidth limit, or modulator nonlinearity. IQ imbalance means that I signals and Q signals do not have same proportions, and IQ skew means that there is a time offset between an I signal and a Q signal in each polarization state. Currently, there are some EVM improvement analysis approaches for specific impairments. However, when all possible impairments coexist, it is extremely complex to modify the EVM, which is contrary to an original intention of simply using the EVM.

Currently, with development of the high-performance forward error correction (forward error correction, FEC) technology, the bit error rate threshold can be at a magnitude of 1E-2. In addition, a buffer depth of a real-time oscilloscope increases (for example, the real-time oscilloscope supports 10 million samples (samples)), so that it is possible to directly measure the performance of the coherent transmitter by measuring the bit error rate. In view of this, the present disclosure provides a method for measuring performance of a coherent transmitter based on a bit error rate.

For ease of understanding, the following describes a system architecture of a communication system.

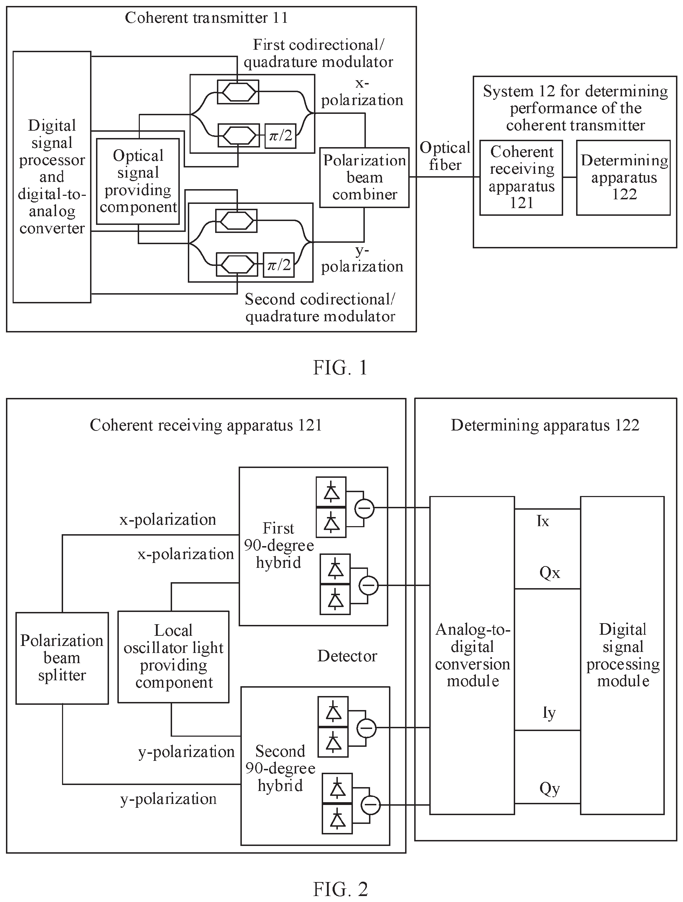

FIG. 1 provides an example of a system architecture of a communication system. The system architecture includes a coherent transmitter 11 and a system 12 for determining performance of the coherent transmitter. The coherent transmitter 11 and the system 12 are connected through an optical fiber. The coherent transmitter 11 is a to-be-measured coherent transmitter, and is configured to transmit a dual-polarization optical signal. The system 12 is configured to receive the dual-polarization optical signal transmitted by the coherent transmitter 11, and determine the performance of the coherent transmitter 11 based on the dual-polarization optical signal.

The coherent transmitter 11 is a high-speed coherent transmitter, for example, a coherent transmitter with a bandwidth of 400G. The coherent transmitter 11 includes a DSP, a digital-to-analog converter (digital-to-analog converter, DAC), an optical signal providing component, a first in-phase/quadrature modulator, a second in-phase/quadrature modulator, and a polarization beam combiner (polarization beam combiner, PBC). When an optical signal is transmitted, an electrical signal of a test signal enters the DAC through the DSP, and the DAC performs digital-to-analog conversion on the electrical signal to convert the electrical signal into an analog signal. The analog signal is converted into four analog signals through serial-to-parallel conversion. The test signal is a signal sequence with a fixed length. The test signal is random and can simulate data transmitted in a real optical transmission scenario. The optical signal providing component includes a laser and a polarization beam splitter (polarization beam splitter). The laser transmits an optical signal. The optical signal is converted into an x-polarization optical signal and a y-polarization optical signal through the polarization beam splitter. x-polarization and y-polarization are perpendicular to each other. The first in-phase/quadrature modulator includes two modulators and one $\pi/2$ phase shifter, and the second in-phase/quadrature modulator includes two modulators and one $\pi/2$ phase shifter. The two modulators in the first in-phase/quadrature modulator modulate two analog signals to x-polarization optical signals respectively to obtain two modulated polarization optical signals, where one of the two modulated polarization optical signals passes through the $\pi/2$ phase shifter, and undergoes phase shifting by $\pi/2$ and is quadrature to the other modulated polarization optical signal. Finally, an x-polarization in-phase signal and an x-polarization quadrature signal are output, represented as Ix1 and Qx1. The two modulators in the second in-phase/quadrature modulator modulate two analog signals to y-polarization optical signals respectively to obtain two modulated polarization optical signals, where one of the two modulated polarization optical signals passes through the $\pi/2$ phase shifter, and undergoes phase shifting by $\pi/2$ and is quadrature to the other modulated polarization optical signal. Finally, a y-polarization in-phase signal and a y-polarization quadrature signal are output, represented as Iy1 and Qy1. Then, the two polarized in-phase signals and the two polarized quadrature signals are combined into one dual-polarization optical signal through the polarization beam combiner, and the dual-polarization optical signal is transmitted to the system 12 through one optical fiber. A length of the optical fiber is set based on an actual test requirement.

The system 12 includes a coherent receiving apparatus 121 and a determining apparatus 122. The coherent receiving apparatus 121 is configured to obtain, based on the dual-polarization optical signal from the coherent transmitter 11, four analog signals carried in the dual-polarization optical signal. The determining apparatus 122 is an apparatus for determining the performance of the coherent transmitter 11, and is configured to determine the performance of the coherent transmitter 11 based on the four analog signals.

Refer to FIG. 2. The coherent receiving apparatus 121 includes a polarization beam splitter, a local oscillator light providing component, a first 90-degree hybrid (hybrid), a second 90-degree hybrid, and four pairs of detectors, where each pair of detectors includes two detectors. The polarization beam splitter splits the dual-polarization optical signal from the coherent transmitter 11 into an x-polarization optical signal and a y-polarization optical signal. The local oscillator light providing component includes a laser and a polarization beam splitter. The laser transmits a local oscillator optical signal, and the local oscillator optical signal is converted into an x-polarization local oscillator optical signal and a y-polarization local oscillator optical signal through the polarization beam splitter. The x-polarization local oscillator optical signal and the x-polarization optical signal enter the first 90-degree hybrid and undergoes frequency mixing processing, and four optical signals are output. Relative phase differences of the four optical signals are 0 degrees, 90 degrees, 180 degrees, and 270 degrees. In the four optical signals, optical signals with the differences of 0 degrees and 180 degrees enter a pair of detectors to obtain one electrical signal, and optical signals with the differences of 90 degrees and 270 degrees enter another pair of detectors to obtain one electrical signal. The y-polarization local oscillator optical signal and the y-polarization optical signal enter the second 90-degree hybrid and undergoes frequency mixing processing, and four optical signals are output. Relative phase differences of the four optical signals are 0 degrees, 90 degrees, 180 degrees, and 270 degrees. In the four optical signals, optical signals with the differences of 0 degrees and 180 degrees enter a pair of detectors to obtain one electrical signal, and optical signals with the differences of 90 degrees and 270 degrees enter another pair of detectors to obtain one electrical signal. In this way, the coherent receiving apparatus 121 outputs the four electrical signals to the determining apparatus 122.

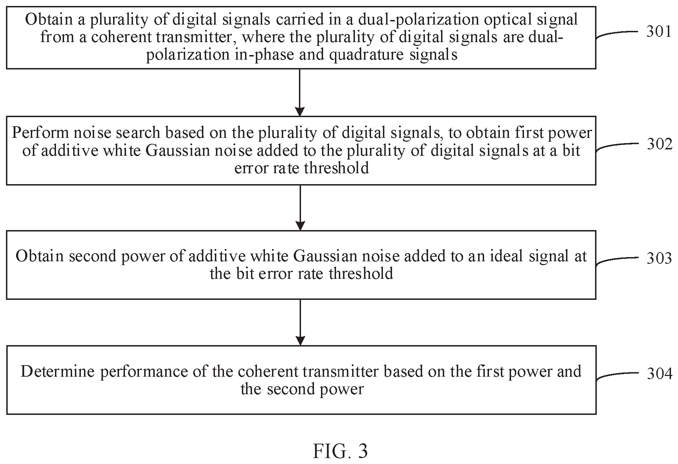

The determining apparatus 122 is a real-time oscilloscope or a compute device that has a digital signal processing function, and the compute device is a server or a terminal device. The determining apparatus 122 includes an analog-to-digital conversion module and a digital signal processing module. The analog-to-digital conversion module is configured to perform analog-to-digital conversion on the four electrical signals from the coherent receiving apparatus 121, to convert the four electrical signals into four digital signals. For example, the analog-to-digital conversion module includes four analog-to-digital conversion units, and the four analog-to-digital conversion units respectively convert the four electrical signals into four digital signals, where the four digital signals are four real digital signals. The digital signal processing module is configured to determine the performance of the coherent transmitter 11 based on the four digital signals, where the four digital signals include an x-polarization in-phase signal, a y-polarization in-phase signal, an x-polarization quadrature signal, and a y-polarization quadrature signal, which are respectively represented as Ix, Iy, Qx, and Qy. The four digital signals may also be referred to as four field component signals. Alternatively, the digital signal processing module converts the four digital signals into two complex digital signals, where one complex digital signal is an x-polarization in-phase signal and an x-polarization quadrature signal, and the other complex digital signal is a y-polarization in-phase signal and a y-polarization quadrature signal. A process in which the determining apparatus 122 determines the performance of the coherent transmitter 11 is described with reference to FIG. 3.

FIG. 3 provides a method procedure for determining the performance of the coherent transmitter 11 (described as a coherent transmitter below). Refer to step 301 to step 304.

Step 301: Obtain a plurality of digital signals carried in a dual-polarization optical signal from the coherent transmitter, where the plurality of digital signals are dual-polarization in-phase and quadrature signals.

In this embodiment, as described above, the analog-to-digital conversion module performs analog-to-digital conversion on the four electrical signals from the coherent receiving apparatus 121 to convert the four electrical signals into the four digital signals, where the four digital signals are four real digital signals; or the digital signal processing module combines the four digital signals into two complex digital signals. In this way, the obtained plurality of digital signals include four real digital signals or two complex digital signals.

Step 302: Perform noise search based on the plurality of digital signals, to obtain first power of additive white Gaussian noise added to the plurality of digital signals at a bit error rate threshold.

The bit error rate threshold is a decision threshold of forward error correction. The bit error rate threshold is a maximum bit error rate at which the dual-polarization optical signal transmitted by the coherent transmitter can be correctly decoded when the dual-polarization optical signal is received by a coherent receiver. The bit error rate threshold is related to a transmission bandwidth and a process of the coherent transmitter, a transmit power and a transmission distance of the optical signal, and the like.

In this embodiment, power of the additive white Gaussian noise added by the digital signal processing module to the plurality of digital signals when the digital signal processing module performs noise search based on the plurality of digital signals and determines that a bit error rate is the bit error rate threshold is referred to as the first power.

During noise search, same additive white Gaussian noise is added to each digital signal, and then a comprehensive bit error rate of the plurality of digital signals is uniformly calculated. The first power is power of the additive white Gaussian noise added to each digital signal.

Step 303: Obtain second power of additive white Gaussian noise added to an ideal signal at the bit error rate threshold.

The ideal signal is an undistorted digital signal determined based on the plurality of digital signals.

In this embodiment, the digital signal processing module adds the additive white Gaussian noise to the ideal signal, so that a bit error rate reaches the bit error rate threshold. Power of the additive white Gaussian noise added to the ideal signal when the bit error rate is determined as the bit error rate threshold is referred to as the second power.

A manner of obtaining the second power is similar to the manner of obtaining the first power. Details are not described herein again.

Step 304: Determine the performance of the coherent transmitter based on the first power and the second power.

In an implementation of step 304, the performance of the coherent transmitter is determined based on the first power, the second power, and noise of a coherent receiver front end.

The coherent receiver front end is configured to convert the received dual-polarization optical signal into an electrical signal. The noise of the coherent receiver front end is determined based on an empirical value. For example, the noise is common noise of a front end of a specific-generation coherent receiver, and the specific-generation coherent receiver is configured to receive a dual-polarization optical signal transmitted by the to-be-measured coherent transmitter.

In this embodiment, the digital signal processing module determines a transmitter constellation closure penalty based on the first power, the second power, and the noise of the coherent receiver front end. The transmitter constellation closure penalty represents the performance of the coherent transmitter. A smaller transmitter constellation closure penalty indicates better performance of the coherent transmitter. On the contrary, a larger transmitter constellation closure penalty indicates poorer performance of the coherent transmitter. The transmitter constellation closure penalty indicates quality of a constellation diagram. The constellation diagram is generated based on the dual-polarization optical signal from the coherent transmitter. The quality of the constellation diagram includes constellation closure of constellation points, and the opening and closing degree may also be referred to as a discrete degree.

In another implementation of step 304, the performance of the coherent transmitter is directly determined based on the first power and the second power. For example, the performance of the coherent transmitter may be determined based on a relative virtual noise signal-to-noise ratio of a signal. At the bit error rate threshold, the relative virtual noise signal-to-noise ratio is a difference between a first virtual noise signal-to-noise ratio and a second virtual noise signal-to-noise ratio, where the first virtual noise signal-to-noise ratio is a virtual noise signal-to-noise ratio of the plurality of digital signals at the bit error rate threshold, and the second virtual noise signal-to-noise ratio is a virtual noise signal-to-noise ratio of the ideal signal at the bit error rate threshold. When a signal power has been normalized, a virtual noise signal-to-noise ratio is determined based on a reciprocal of power of additive white Gaussian noise added to the signal. Refer to Formula (1). The ideal signal is an undistorted signal determined based on the plurality of digital signals.

$$SNR = 10\lg(\frac{1}{\sigma^2}) \qquad\qquad (1)$$

In Formula (1), *SNR* represents the virtual noise signal-to-noise ratio, and $\sigma^2$ represents the power of the additive white Gaussian noise added to the signal.

In this way, for each target bit error rate, a relative virtual noise signal-to-noise ratio is represented as Formula (2).

$$\Delta SNR = 10\lg(\frac{1}{\sigma^2_{TUT}}) - 10\lg(\frac{1}{\sigma^2_{ideal}}) \qquad\qquad (2)$$

In Formula (2), Δ*SNR* represents the relative virtual noise signal-to-noise ratio, $\sigma^2_{TUT}$ represents the first power, and $\sigma^2_{ideal}$ represents the second power.

Then, whether the relative virtual noise signal-to-noise ratio is greater than a specified threshold corresponding to the bit error threshold is determined. If the relative virtual noise signal-to-noise ratio is greater than the specified threshold, it is determined that the performance of the coherent transmitter does not meet a requirement; otherwise, it is determined that the performance of the coherent transmitter meets a requirement.

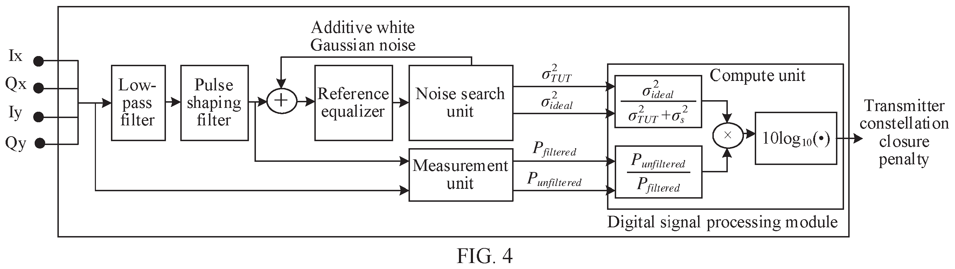

In an optional manner, the digital signal processing module can be logically divided into a plurality of parts. With reference to a division manner of the digital signal processing module, the following describes a procedure of determining the performance of the coherent transmitter. FIG. 4 provides a block diagram of the procedure, corresponding to the following step 401 to step 405. Refer to FIG. 4. The digital signal processing module includes a low-pass filter (low-pass filter, LPF), a pulse shaping filter (pulse shaping filter, PSF), a noise search (noise search) unit, a reference equalizer, a measurement unit, and a compute unit. In FIG. 4, the four real digital signals are used as an example for description. A manner of evaluating the performance of the coherent transmitter based on the two complex digital signals is similar. Details are not described in this embodiment of the present disclosure.

Step 401: The low-pass filter performs low-pass filtering on the plurality of real digital signals.

A bandwidth of the low-pass filter is determined based on a bandwidth of the coherent receiver front end, and is used to simulate a bandwidth limit of the coherent receiver front end. For example, the bandwidth of the low-pass filter is equal to the bandwidth of the coherent receiver front end, and the bandwidth of the coherent receiver front end is determined based on an empirical value. For example, the bandwidth of the coherent receiver front end is a common bandwidth of a front end of a specific-generation coherent receiver, and the specific-generation coherent receiver is configured to receive an optical signal transmitted by the to-be-measured coherent transmitter. The low-pass filter may be a Gaussian filter, and a 3 dB bandwidth is Bd/2, where Bd represents a symbol rate of a dual-polarization signal.

In this embodiment, the digital signal processing module receives the four real digital signals from the analog-to-digital conversion module, and the low-pass filter performs low-pass filtering on the four real digital signals, to obtain four low-pass filtered signals. For example, the low-pass filter has four channels for performing low-pass filtering, and the four channels respectively perform low-pass filtering on the four real digital signals, to obtain four low-pass filtered signals.

It should be noted that, the coherent receiving apparatus for testing the performance of the coherent transmitter generally has a large bandwidth, and a signal is not limited. Therefore, the low-pass filter is introduced to simulate the bandwidth limit of the coherent receiver front end, so as to subsequently determine the performance of the coherent transmitter at the coherent receiver front end.

Step 402: The pulse shaping filter performs pulse shaping and matched filtering on the low-pass filtered signals to obtain matched filtered signals.

In this embodiment, the pulse shaping filter performs pulse shaping on the four low-pass filtered signals to obtain four pulse-shaped signals. Then, the four pulse-shaped signals are filtered, and matched filtering is performed, to obtain four matched filtered signals. For example, the pulse shaping filter has four channels for performing pulse shaping and filtering, and pulse shaping and matched filtering are performed on the four low-pass filtered signals respectively on the four channels, so as to obtain the four matched filtered signals.

Optionally, the pulse shaping filter is a root raised cosine (root raised cosine, RRC) filter, and a roll-off factor of the RRC filter is 0.1.

Step 403: The noise search unit adds additive white Gaussian noise to the matched filtered signals, to obtain signals to which the additive white Gaussian noise is added. The reference equalizer performs equalization on the signals to which the additive white Gaussian noise is added, to obtain equalized signals. The noise search unit determines, based on the equalized signals, the first power of the additive white Gaussian noise added to the matched filtered signals at the bit error rate threshold, and obtains the second power of the additive white Gaussian noise added to the ideal signal at the bit error rate threshold.

The reference equalizer may be a feed forward equalizer (feed forward equalizer, FFE). For example, the feed forward equalizer is a 13-tap T/2 interval, where T represents a symbol period.

In this embodiment, the noise search unit outputs the matched filtered signals to the reference equalizer, and the reference equalizer performs impairment equalization on the matched filtered signals to obtain equalized signals, where the equalized signals are a restored symbol sequence. The noise search unit calculates a bit error rate by using the restored symbol sequence, and determines whether the bit error rate reaches the bit error rate threshold. If the bit error rate reaches the bit error rate threshold, it is determined that the power of the additive white Gaussian noise is 0. If the bit error rate does not reach the bit error rate threshold, additive white Gaussian noise is added to the matched filtered signals, to obtain signals to which the additive white Gaussian noise is added. The reference equalizer performs equalization on the signals to which the additive white Gaussian noise is added, to obtain equalized signals, where the equalized signals are a restored symbol sequence. The noise search unit calculates a bit error rate by using the restored symbol sequence, and determines whether the bit error rate reaches the bit error rate threshold. If the bit error rate reaches the bit error rate threshold, power of the current added additive white Gaussian noise is obtained; or if the bit error rate does not reach the bit error rate threshold, additive white Gaussian noise continues to be added until the bit error rate reaches the bit error rate threshold, and power of current added additive white Gaussian noise is obtained. For ease of description, the power of the added additive white Gaussian noise herein is referred to as the first power.

In addition, the noise search unit obtains the ideal signal, for example, a sequence of the ideal signal may be the sequence of the test signal mentioned above. Power of the ideal signal is the same as power of the four real digital signals passing through the low-pass filter, the pulse shaping filter, and the reference equalizer. The noise search unit determines the power of the added additive white Gaussian noise when a bit error rate of the ideal signal reaches the bit error rate threshold. For example, the noise search unit directly uses a formula to calculate the power of the added additive white Gaussian noise. For another example, the noise search unit performs noise search on the ideal signal to obtain the power of the added additive white Gaussian noise. A noise search process is the same as the process of performing noise search on the matched filtered signals. For ease of description, the power of the added additive white Gaussian noise herein is referred to as the second power.

Step 404: The measurement unit determines power of the four real digital signals and power of the matched filtered signals.

In this embodiment, the measurement unit calculates the power of the four real digital signals that is before the four real digital signals enter the low-pass filter, where the power of the four real digital signals is equal to a sum of power of the four real digital signals, represented as $p_{unfiltered}$. In addition, the measurement unit calculates the power of the matched filtered signals, represented as $P_{filtered}$, and the power is a sum of power of the four real digital signals passing through the low-pass filter and the pulse shaping filter.

Step 405: The compute unit determines the performance of the coherent transmitter based on the first power, the second power, and the noise of the coherent receiver front end.

In this embodiment, the digital signal processing module determines the performance of the coherent transmitter according to Formula (1).

$$TCC = 10\log_{10}\left(\frac{\sigma_{ideal}^2}{\sigma_{TUT}^2 + \sigma_s^2}\right) \qquad (3)$$

In Formula (3), TCC represents the transmitter constellation closure penalty, $\sigma_{TUT}^2$ represents the first power, $\sigma_{ideal}^2$ represents the second power, $\sigma_s^2$ represents power of the noise of the coherent receiver front end. The power of the noise of the coherent receiver front end is determined based on an empirical value. For example, the noise is common noise of a front end of a specific-generation coherent receiver, and the specific-generation coherent receiver is configured to receive an optical signal transmitted by the to-be-measured coherent transmitter.

In Formula (3), the transmitter constellation closure penalty is used to reflect the performance of the coherent transmitter. A smaller transmitter constellation closure penalty indicates higher power of additive white Gaussian noise added to the matched filtered signals when the bit error rate threshold is reached, which indicates lower noise of an optical signal received by a coherent receiver, and further indicates better performance of the coherent transmitter. On the contrary, a larger transmitter constellation closure penalty indicates lower power of additive white Gaussian noise added to the matched filtered signals when the bit error rate threshold is reached, which indicates higher noise of an optical signal received by a coherent receiver, and further indicates poorer performance of the coherent transmitter.

Alternatively, the digital signal processing module determines the performance of the coherent transmitter according to Formula (2).

$$TCC = 10\log_{10}\left(\frac{\sigma_{ideal}^2}{\sigma_{TUT}^2 + \sigma_s^2}\right) + 10\log_{10}\left(\frac{p_{unfiltered}}{p_{filtered}}\right) \qquad (4)$$

In Formula (4), TCC represents the transmitter constellation closure penalty, $\sigma_{TUT}^2$ represents the first power, $\sigma_{ideal}^2$ represents the second power, $\sigma_s^2$ represents power of the noise of the coherent receiver front end, where the power of the noise of the coherent receiver front end is determined based on an empirical value, $p_{unfiltered}$ represents the power of the four real digital signals, and $p_{filtered}$ represents the power of the matched filtered signals.

In Formula (4), the transmitter constellation closure penalty is reflected by two parts. One part is added additive white Gaussian noise, and the other part is a bandwidth of a signal transmitted by the coherent transmitter. When the added additive white Gaussian noise is considered, when the bit error rate threshold is reached, higher power of the additive white Gaussian noise added to the matched filtered signals indicates lower noise of the optical signal received by the coherent receiver, which indicates better performance of the coherent transmitter; and on the contrary, when the bit error rate threshold is reached, lower power of the additive white Gaussian noise added to the matched filtered signals indicates higher noise of the optical signal received by the coherent receiver, which indicates poorer performance of the coherent transmitter. When the bandwidth of the signal transmitted by the coherent transmitter is considered, $\dfrac{p_{unfiltered}}{p_{filtered}}$ represents a ratio of the power of the four real digital signals to the power of the four real digital signals undergoing low-pass filtering, pulse shaping, and matched filtering. A larger ratio indicates a larger loss caused by low-pass filtering, pulse shaping, and matched filtering. On the contrary, a smaller ratio indicates a smaller loss and indicates that the bandwidth of the signal transmitted by the coherent transmitter is more appropriate. Therefore, the ratio can be used to limit the bandwidth of the signal transmitted by the coherent transmitter. In this way, when the performance of the coherent transmitter is measured, a smaller transmitter constellation closure penalty indicates better performance of the coherent transmitter; on the contrary, a larger transmitter constellation closure penalty indicates poorer performance of the coherent transmitter. In the determining manner in Formula (4), both the additive white Gaussian noise and the bandwidth of the signal transmitted by the coherent transmitter are considered. Therefore, the performance of the coherent transmitter can be more accurately determined.

It should be noted that when the transmitter constellation closure penalty is calculated according to Formula (3), step 404 does not need to be performed. In addition, when the low-pass filter is not used, $p_{filtered}$ represents power of matched filtered signals that do not undergo low-pass filtering.

It should be further noted that, in step 405, the reason why the noise of the coherent receiver front end is used for determining the transmitter constellation closure penalty is: A signal received by the coherent receiving apparatus already has the noise of the coherent receiver front end. To eliminate impact of the noise, the power of the noise of the coherent receiver front end is added to the denominator, so that only impairment and noise of the coherent transmitter are retained, and the determined performance of the coherent transmitter is accurate.

In the block diagram shown in FIG. 4, the low-pass filter performs low-pass filtering on the digital signal. In another optional manner, the low-pass filter may alternatively perform low-pass filtering on an analog signal, and a processing process of performing low-pass filtering is as follows:

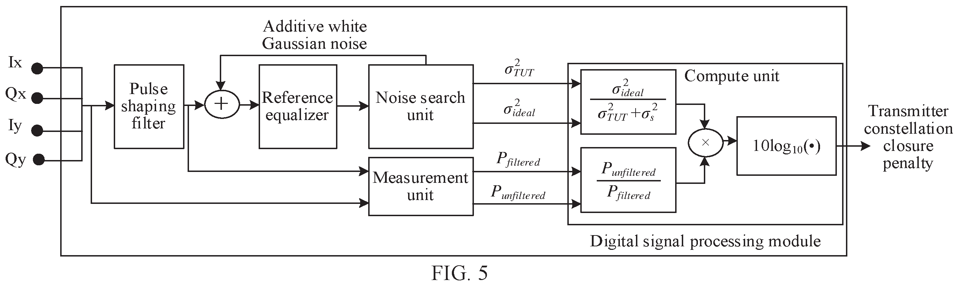

The analog-to-digital conversion module includes the low-pass filter and the analog-to-digital conversion unit. After the analog-to-digital conversion module receives four analog signals sent by the detectors, the low-pass filter performs low-pass filtering on the four analog signals, to obtain four low-pass filtered analog signals. The analog-to-digital conversion unit performs analog-to-digital conversion on the four low-pass filtered analog signals to obtain four real digital signals. FIG. 5 is a block diagram of a procedure in which the digital signal processing module determines the transmitter constellation closure penalty in this case. The four real digital signals are input to the pulse shaping filter for subsequent processing. A subsequent processing process is the same as the processing process in the block diagram shown in FIG. 4, except that $p_{unfiltered}$ represents the power of the four real digital signals that is before the four real digital signals pass through the pulse shaping filter.

In an optional manner, to accurately determine the performance of the coherent transmitter, a specific quantity of symbols need to be measured. When the bit error rate threshold is equal to 1E-2, at least $1 \times 10^5$ symbols are required. In other words, the dual-polarization optical signal includes at least $1 \times 10^5$ symbols. For example, when the bit error rate threshold is equal to 1E-2, about $3 \times 10^5$ symbols are required. Because a buffer depth of a current oscilloscope increases, $3 \times 10^5$ symbols are easily sampled.

Alternatively, to accurately determine the performance of the coherent transmitter, when the bit error rate threshold is equal to 1E-2, each constellation point in a constellation diagram after the dual-polarization optical signal is decoded is approximately $2 \times 10^4$ symbols.

In the foregoing procedure in FIG. 3, the bit error rate threshold is considered. To measure the performance of the coherent transmitter more comprehensively, a performance margin and bit error floor performance may be comprehensively considered, instead of considering only the bit error rate threshold. The performance margin means that specific space is reserved for the performance of the coherent transmitter, to cope with uncertain factors and fault tolerance, so as to ensure reliability. The bit error rate gradually decreases as a signal-to-noise ratio increases. When the bit error rate decreases to some extent, the bit error rate does not decrease. A position at which the bit error rate does not further decrease is referred to as a bit error floor. Therefore, in addition to considering the decision threshold of forward error correction as the bit error rate threshold, more bit error rates are considered to obtain a group of measurement results at different bit error rates.

For example, at least one target bit error rate is further considered. A quantity and a value of the at least one target bit error rate are set based on an actual requirement or an empirical value. For example, the at least one target bit error rate includes three bit error rates, and the target bit error rate may be less than the bit error rate threshold, or may be greater than the bit error rate threshold. An example in which the target bit error rate is less than the bit error rate threshold is used for description.

When a sensitivity penalty is the TCC, for the bit error rate threshold, the TCC of the coherent transmitter is determined according to Formula (3) and Formula (4), and is referred to as a first sensitivity penalty. For each target bit error rate, noise search is performed on the plurality of digital signals to obtain power of additive white Gaussian noise added to the plurality of digital signals at the target bit error rate, which is referred to as third power. In this way, for the at least one target bit error rate, at least one third power can be obtained. In addition, for each target bit error rate, power of additive white Gaussian noise added to the ideal signal is obtained, and is referred to as fourth power. In this way, for the at least one target bit error rate, at least one fourth power can be obtained. Then, for each target bit error rate, a TCC of the coherent transmitter corresponding to the target bit error rate is determined according to Formula (3) and Formula (4), and is referred to as a second sensitivity penalty, where $\sigma^2_{TUT}$ represents the third power, and $\sigma^2_{ideal}$ represents the fourth power.

When a sensitivity penalty is a relative virtual noise signal-to-noise ratio, for a bit error rate, the relative virtual noise signal-to-noise ratio is a difference between a first virtual noise signal-to-noise ratio and a second virtual noise signal-to-noise ratio, where the first virtual noise signal-to-noise ratio is a virtual noise signal-to-noise ratio of the plurality of digital signals at the target bit error rate, and the second virtual noise signal-to-noise ratio is a virtual noise signal-to-noise ratio of the ideal signal at the target bit error rate. When a signal power has been normalized, a virtual noise signal-to-noise ratio is determined based on a reciprocal of power of additive white Gaussian noise added to a signal. Refer to Formula (1). For the bit error rate threshold, the relative virtual noise signal-to-noise ratio of the coherent transmitter is determined according to Formula (2), and is referred to as a first sensitivity penalty. For each target bit error rate, the relative virtual noise signal-to-noise ratio of the coherent transmitter is determined according to Formula (2), and is referred to as a second sensitivity penalty, where $\sigma^2_{TUT}$ represents the third power, and $\sigma^2_{ideal}$ represents the fourth power.

Alternatively, there is a conversion relationship between each relative virtual noise signal-to-noise ratio and the TCC. For the conversion relationship, refer to Formula (5).

$$\Delta SNR = 10\lg\left(\frac{\sigma^2_{ideal}}{\dfrac{\sigma^2_{ideal}}{10^{(TCC/10)}} \times \dfrac{p_{unfiltered}}{p_{filtered}} - \sigma^2_s}\right) \qquad (5)$$

In Formula (5), $\Delta SNR$ represents the relative virtual noise signal-to-noise ratio, and the TCC may be obtained according to the foregoing Formula (3) or Formula (4). During calculation, $\Delta SNR$ may be obtained through calculation according to Formula (2), or may be obtained through calculation according to Formula (5).

In practice, the noise $\sigma^2_s$ of the coherent receiver front end is within a specific range and can be ignored, and $\dfrac{p_{unfiltered}}{p_{filtered}}$ is also within a specific range and is close to 1. Therefore, Formula (5) may be converted into Formula (2).

The bit error rate threshold and the target bit error rate each are a bit error rate, and correspond to a sensitivity penalty of the coherent transmitter. After a sensitivity penalty corresponding to each bit error rate is obtained, for each bit error rate, it may be determined whether the sensitivity penalty corresponding to the bit error rate exceeds a first threshold, where the first threshold is a specified threshold corresponding to the bit error rate, and the specified threshold may be set based on an actual requirement. If a sensitivity penalty corresponding to at least one bit error rate exceeds a specified threshold, it is determined that the performance of the coherent transmitter does not meet a requirement; otherwise, it is determined that the performance of the coherent transmitter meets a requirement.

For example, as shown in Table 1, a table of a correspondence between a specified threshold required by the TCC and a bit error rate when the sensitivity penalty is the TCC is provided.

Table 1

| Bit error rate | Sensitivity penalty (specified threshold required by a TCC) |
|---|---|
| 2E-2 (bit error rate threshold, that is, decision threshold of forward error correction) | 3 dB |
| 2E-3 (target bit error rate) | 8 dB |
| 2E-4 (target bit error rate) | 15 dB |

As shown in Table 2, a table of a correspondence between a bit error rate and a corresponding specified threshold when the sensitivity penalty is the relative virtual noise signal-to-noise ratio is provided.

Table 2

| Bit error rate | Sensitivity penalty (specified threshold required by a relative virtual noise signal-to-noise ratio) |
|---|---|
| 2E-2 (bit error rate threshold, that is, decision threshold of forward error correction) | 4 dB |
| 2E-3 (target bit error rate) | 9 dB |
| 2E-4 (target bit error rate) | 16 dB |

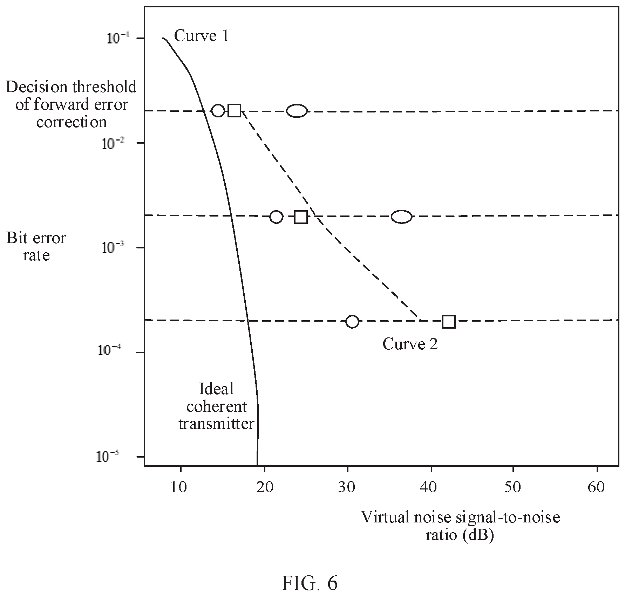

In addition, FIG. 6 further provides a diagram of a relationship between a virtual noise signal-to-noise ratio and a bit error rate. As shown in FIG. 6, Curve 1 represents a relationship curve between a virtual noise signal-to-noise ratio and a bit error rate for an ideal signal. Bit error rate thresholds and minimum values of target bit error rates in Curve 2, Curve 1, and Table 2 form an area. If a sensitivity penalty of the coherent transmitter is within the area, it indicates that the performance meets the requirement; otherwise, the performance does not meet the requirement. For example, performance of a coherent transmitter represented by a circle meets the requirement, and performance of a coherent transmitter represented by a square or an ellipse does not meet the requirement. In addition, a shape of this area is like a waterfall, and the area is also referred to as a waterfall template area.

In another optional manner, when there are a plurality of bit error rates, considering that more bit error rates indicate a larger computing amount, to improve computational efficiency, an interpolation manner may be used to calculate a first sensitivity penalty corresponding to each bit error rate, and a processing manner is as follows:

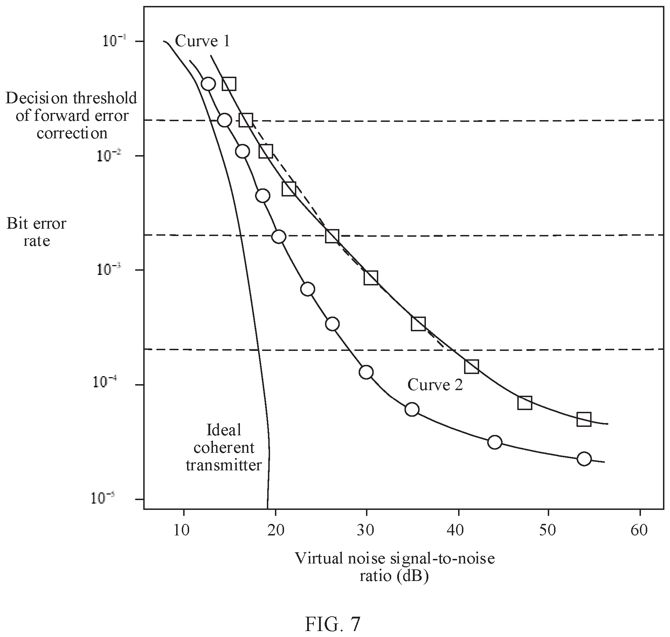

During a single calculation of a sensitivity penalty of the coherent transmitter, noise is gradually added to the signal based on a specific step. A group of sensitivity penalties and bit error rates may be obtained by adjusting one step each time. A sensitivity penalty corresponding to each bit error rate may be obtained through interpolation by using a plurality of groups of sensitivity penalties and bit error rates. In this way, computational efficiency can be improved. As shown in FIG. 7, a diagram of obtaining a relative virtual noise signal-to-noise ratio at each bit error rate through interpolation is provided. FIG. 7 shows two coherent transmitters and an ideal coherent transmitter, where a circle represents one coherent transmitter, and a square represents the other coherent transmitter.

In still another optional manner, considering that a single constraint may cause inaccuracy, both the virtual noise signal-to-noise ratio and the TCC may be used for constraint.

For a formula of the virtual noise signal-to-noise ratio, refer to Formula (1). The power of the additive white Gaussian noise added to the plurality of digital signals can be determined according to Formula (1), and then the additive white Gaussian noise with the power is added to each of the plurality of digital signals, to calculate bit error rates of the plurality of digital signals. In this way, at least one bit error rate can be obtained by using at least one virtual noise signal-to-noise ratio, and virtual noise signal-to-noise ratios are in one-to-one correspondence with bit error rates.

In addition, the TCC of the coherent transmitter is determined based on one or more bit error rates. If a plurality of bit error rates are used herein, a plurality of TCCs can be obtained through calculation. Refer to the foregoing process of calculating the TCC. When one bit error rate is used, the bit error rate may be the bit error rate threshold. When a plurality of bit error rates are used, the plurality of bit error rates include the bit error rate threshold and at least one target bit error rate. The following uses one bit error rate as an example for description.

Then, for each virtual noise signal-to-noise ratio, a ratio of a bit error rate corresponding to the virtual noise signal-to-noise ratio to the bit error rate threshold is calculated, and whether the ratio is greater than a bit error rate ratio corresponding to the virtual noise signal-to-noise ratio is determined. In addition, whether a TCC corresponding to the bit error rate threshold is greater than a specified threshold corresponding to the bit error rate threshold is determined. If there is no ratio greater than a corresponding bit error rate ratio, and there is no TCC corresponding to the bit error rate threshold greater than a specified threshold corresponding to the bit error rate threshold, it is determined that the performance of the coherent transmitter meets the requirement; otherwise, it is determined that the performance of the coherent transmitter does not meet the requirement.

For example, in Table 3 and Table 4, both a bit error rate threshold and a relative virtual noise signal-to-noise ratio are used for constraint. In Table 3, the bit error rate threshold is used for constraint. In Table 4, the relative virtual noise signal-to-noise ratio is used for constraint, a decision threshold of forward error correction is used as the bit error rate threshold, and two virtual noise signal-to-noise ratios are used.

Table 3

| Bit error rate | Specified threshold required by a TCC |
|---|---|
| 2E-2 (bit error rate threshold) | 3 dB |

Table 4

| Virtual noise signal-to-noise ratio | Bit error rate ratio (bit error rate/bit error rate threshold) |
|---|---|
| 17 dB | E-1 |
| 26 dB | E-3 |
| 38 dB | E-7 |

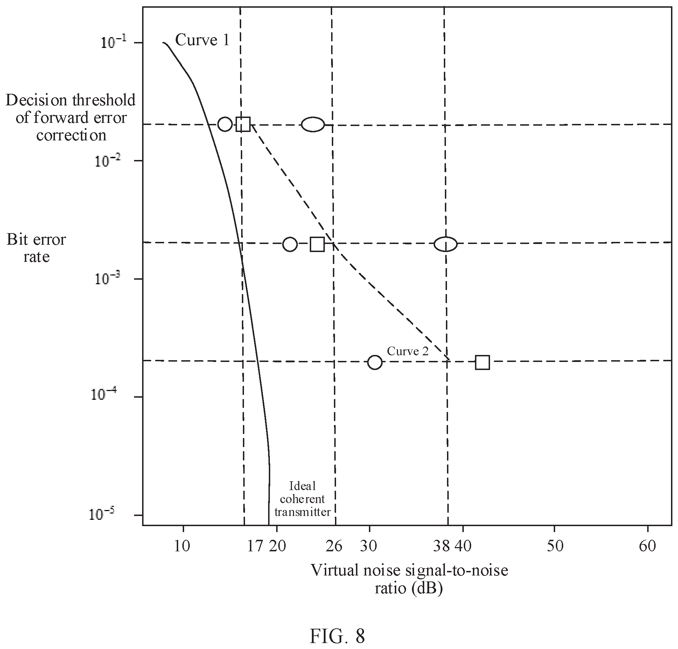

FIG. 8 provides coordinate points of the virtual noise signal-to-noise ratio and the bit error rate in Table 4.

In yet another optional manner, alternatively, only content in Table 4 may be used to determine the performance of the coherent transmitter. For example, for each virtual noise signal-to-noise ratio, a bit error rate of the plurality of digital signals at the virtual noise signal-to-noise ratio is calculated by using the foregoing method. Then, for each specified virtual noise signal-to-noise ratio, a ratio of a bit error rate corresponding to the virtual noise signal-to-noise ratio to the bit error rate threshold is calculated, and whether the ratio is greater than a bit error rate ratio corresponding to the virtual noise signal-to-noise ratio is determined. If there is no ratio greater than a corresponding bit error rate ratio, it is determined that the performance of the coherent transmitter meets the requirement; otherwise, it is determined that the performance of the coherent transmitter does not meet the requirement.

In this manner, because power of additive white Gaussian noise does not need to be adjusted one by one, a computational process can be simplified, and compute resources can be reduced.

In an optional manner, the dual-polarization optical signal includes at least $1 \times 10^5$ symbols at the target bit error rate.

In an optional manner, the analog-to-digital conversion module obtains the plurality of digital signals, the digital signal processing module determines the power, and the performance of the coherent transmitter is determined based on information such as the power.

It should be noted that, in the foregoing descriptions, the performance of the coherent transmitter is determined based on a threshold. In practice, the waterfall template area shown in FIG. 6 may be drawn first, and then whether the sensitivity penalty is within the waterfall template area is determined. If the sensitivity penalty is within the waterfall template area, it is determined that the performance of the coherent transmitter meets the requirement; otherwise, it is determined that the performance of the coherent transmitter does not meet the requirement. In addition, the further the sensitivity penalty deviates from the waterfall template area, the poorer the performance of the coherent transmitter.

In addition, in this embodiment of the present disclosure, alternatively, no noise may be added to a signal, an EVM is obtained by measuring a restored signal, and the EVM is used as auxiliary information for determining the performance of the coherent transmitter.

To better describe an effect of determining the performance of the coherent transmitter based on the bit error rate threshold in this embodiment of the present disclosure, the following describes an effect of this embodiment of the present disclosure by using a simulation result.

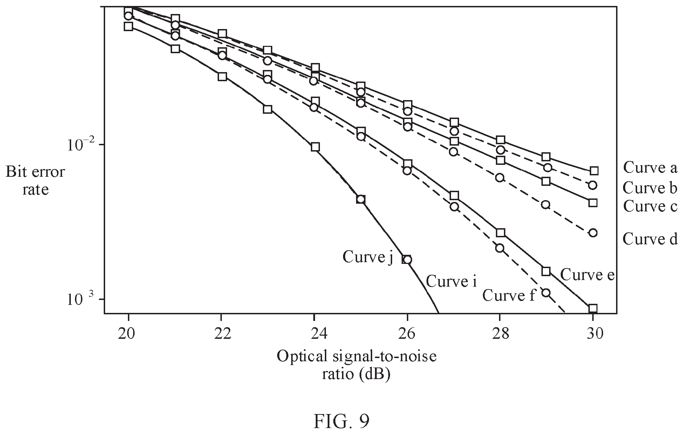

Accuracy of an EVM method is compared with accuracy of a bit error rate method (a method for determining the performance of the coherent transmitter in the present disclosure) by using 112 GBd probabilistic constellation shaping (probabilistic constellation shaping, PCS)-16 quadrature amplitude modulation (quadrature amplitude modulation, QAM) back-to-back (back-to-back, BTB) transmission as an example. FIG. 9 shows curves of a bit error rate and an optical signal-to-noise ratio measured in four cases by using an EVM method and a bit error rate method, where a horizontal axis represents an optical signal-to-noise ratio in a unit of dB, and a vertical axis represents a bit error rate. In a first case, only additive white Gaussian noise exists in the coherent transmitter, corresponding to Curve i and Curve j, where Curve i represents the EVM method, and Curve j represents the bit error rate method. In a second case, a bandwidth of a signal transmitted by the coherent transmitter is 67 GHz, a resolution of an analog-to-digital converter is 4 bits (bit), and a linewidth of a laser in the coherent transmitter is 0 kHz, corresponding to Curve e and Curve f, where Curve e represents the EVM method, and Curve f represents the bit error rate method. In a third case, a bandwidth of a signal transmitted by the coherent transmitter is 55 GHz, a resolution of an analog-to-digital converter is 4 bits, and a linewidth of a laser in the coherent transmitter is 0 kHz, corresponding to Curve c and Curve d, where Curve c represents the EVM method, and Curve d represents the bit error rate method. In a fourth case, a bandwidth of a signal transmitted by the coherent transmitter is 55 GHz, a resolution of an analog-to-digital converter is 4 bits, and a linewidth of a laser in the coherent transmitter is 3 kHz, corresponding to Curve a and Curve b, where Curve a represents the EVM method, and Curve b represents the bit error rate method. It can be learned from FIG. 9 that, when only additive white Gaussian noise exists in the coherent transmitter, the curve corresponding to the EVM completely coincides with the curve corresponding to the bit error rate. When inter-symbol interference (inter-symbol interference, ISI) exists in the coherent transmitter, the EVM method underestimates an actual bit error rate. As shown in Table 5, in some scenarios, an error of the EVM method may reach 0.5 dB.

Table 5

| Case | Optical signal-to-noise ratio calculated by using an EVM method | Optical signal-to-noise ratio calculated by using a bit error rate method | Power penalty (penalty) of a coherent transmitter calculated by using the EVM method | Power penalty of the coherent transmitter calculated by using the bit error rate method | Power penalty increment by using the bit error rate method |
|---|---|---|---|---|---|
| Case 1 | 23.92 dB | 23.92 dB | 0 dB | 0 dB | 0 dB |
| Case 2 | 25.43 dB | 25.28 dB | 1.51 dB | 1.36 dB | 0.15 dB |
| Case 3 | 27.17 dB | 26.78 dB | 3.25 dB | 2.86 dB | 0.39 dB |

(continued)

| Case | Optical signal-to-noise ratio calculated by using an EVM method | Optical signal-to-noise ratio calculated by using a bit error rate method | Power penalty (penalty) of a coherent transmitter calculated by using the EVM method | Power penalty of the coherent transmitter calculated by using the bit error rate method | Power penalty increment by using the bit error rate method |
|---|---|---|---|---|---|
| Case 4 | 28.29 dB | 27.77 dB | 4.37 dB | 3.85 dB | 0.52 dB |

It can be learned from Table 5 that, when a same bit error rate is reached in a case in which not only additive white Gaussian noise exists, an optical signal-to-noise ratio calculated by using the bit error rate method is smaller than that in the EVM method. This indicates that the EVM method requires a higher optical signal-to-noise ratio to achieve the bit error rate, and indicates that the EVM method overestimates noise. When a same bit error rate is reached in a case in which not only additive white Gaussian noise exists, a power penalty of the coherent transmitter calculated by using the bit error rate method is smaller than that in the EVM method. This indicates that the EVM method requires a higher power penalty to achieve the bit error rate, and indicates that the power penalty is overestimated. Therefore, an output optical power of the coherent transmitter can be reduced by using the bit error rate method.

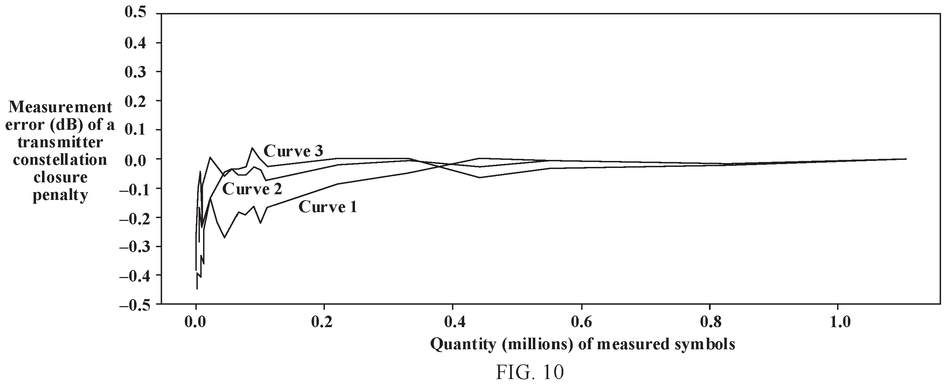

In this embodiment of the present disclosure, a diagram of simulation of a measurement error and a quantity of measured symbols in the bit error rate method is further provided. Refer to FIG. 10. In FIG. 10, a horizontal axis represents the quantity of symbols, and a vertical axis represents the measurement error. FIG. 10 shows measurement errors for dual-polarization (dual-polarization, DP)-16QAM and PCS shaping DP-16QAM at a bit error rate threshold of IE-2. FIG. 10 provides curves of measurement errors of three symbols, which are respectively Curve 1, Curve 2, and Curve 3. Curve 1 corresponds to each symbol including 4.0 bits, Curve 2 corresponds to each symbol including 3.5 bits, and Curve 3 corresponds to each symbol including 3.0 bits. It can be learned from FIG. 10 that, when the quantity of measured symbols exceeds $1 \times 10^7$, measurement errors of the three symbols are close.

In addition, when the simulation result in FIG. 10 is obtained, constellation diagrams of the three symbols are further obtained. When the symbols include 4.0 bits, constellation points in the constellation diagram are evenly distributed. When the symbols include 3.5 bits or 3.0 bits, constellation points in the constellation diagram are not evenly distributed, a quantity of symbols of a constellation point in the middle is large, and a quantity of symbols at an edge is small, which is not shown in FIG. 10.

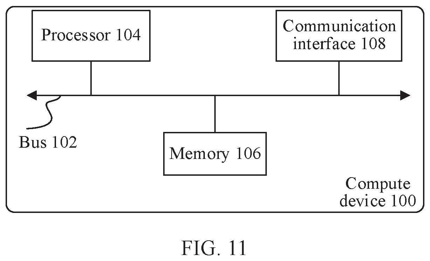

An embodiment of the present disclosure further provides a compute device 100. As shown in FIG. 11, the compute device 100 includes a bus 102, a processor 104, a memory 106, and a communication interface 108. The processor 104, the memory 106, and the communication interface 108 communicate with each other via the bus 102. The compute device 100 may be a server or a terminal device. It should be understood that quantities of processors and memories in the compute device 100 are not limited in the present disclosure.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 11. However, it does not indicate that there is only one bus or only one type of bus. The bus 102 may include a path for transferring information between components (for example, the memory 106, the processor 104, and the communication interface 108) of the compute device 100.

The processor 104 may include any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 106 may include a volatile memory (volatile memory), for example, a random access memory (random access memory, RAM). The memory 106 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable computer instructions, and the processor 104 executes the executable computer instructions to implement functions of the analog-to-digital conversion module and the digital signal processing module.

The communication interface 108 implements communication between the compute device 100 and another device or a communication network through a transceiver module, for example, but not limited to, a network interface card or a transceiver.

An embodiment of the present disclosure further provides a computer program product. The computer program product includes computer instructions, and the computer instructions are stored in a computer-readable storage medium. A processor of a compute device reads the computer instructions from the computer-readable storage medium, and the processor executes the computer instructions, so that the compute device performs the procedures in step 301 to step 304.

A person of ordinary skill in the art may be aware that, in combination with the examples described in embodiments disclosed in the present disclosure, method steps and units may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present disclosure.

In the several embodiments provided in the present disclosure, it should be understood that the disclosed system architecture, apparatus, and method may be implemented in other manners. For example, the described apparatus embodiment is an example. For example, division into the modules is logical function division and may be other division in an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, to be specific, may be located at one place, or may be distributed on a plurality of network modules. Some or all of the modules may be selected based on an actual need to achieve the objectives of the solutions in embodiments of the present disclosure.

In addition, modules in embodiments of the present disclosure may be integrated into one processing module, or each of the modules may exist alone physically, or two or more modules may be integrated into one module. The integrated module may be implemented in a form of hardware, or may be implemented in a form of a software module.

When the integrated module is implemented in a form of a software functional module and used as an independent product, the integrated module may be stored in a computer-readable storage medium. Based on such an understanding, the technical solutions of the present disclosure essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of steps of the methods in embodiments of the present disclosure. The foregoing storage medium includes any medium that can store program code, such as a USB flash drive, a removable hard disk, a ROM, a RAM, a magnetic disk, or an optical disc.

In the present disclosure, terms such as "first" and "second" are used to distinguish between same items or similar items that have basically same effects and functions. It should be understood that there is no logical or time sequence dependency between "first" and "second", and a quantity and an execution sequence are not limited. It should be further understood that although the following descriptions use terms such as "first" and "second" to describe various elements, these elements should not be limited by the terms. These terms are simply used to distinguish one element from another element. For example, without departing from the scope of the various examples, first power may be referred to as second power, and similarly, the second power may be referred to as first power. Both the first power and the second power may be power, and in some cases, the first power and the second power may be separate and different power.

The foregoing descriptions are merely example implementations of the present disclosure, but are not intended to limit the protection scope of the present disclosure. Any equivalent modification or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. A method for determining performance of a coherent transmitter, wherein the method comprises:

   obtaining a plurality of digital signals carried in a dual-polarization optical signal from the coherent transmitter, wherein the plurality of digital signals are dual-polarization in-phase and quadrature signals;
   performing noise search based on the plurality of digital signals, to obtain first power of additive white Gaussian noise added to the plurality of digital signals at a bit error rate threshold;
   obtaining second power of additive white Gaussian noise added to an ideal signal at the bit error rate threshold, wherein the ideal signal is an undistorted signal determined based on the plurality of digital signals; and

determining the performance of the coherent transmitter based on the first power and the second power.

2. The method according to claim 1, wherein the determining the performance of the coherent transmitter based on the first power and the second power comprises:
determining the performance of the coherent transmitter based on the first power, the second power, and noise of a coherent receiver front end.

3. The method according to claim 2, wherein the performing noise search based on the plurality of digital signals, to obtain the first power of the additive white Gaussian noise added to the plurality of digital signals at the bit error rate threshold comprises:

   performing pulse shaping and matched filtering on the plurality of digital signals to obtain matched filtered signals; and
   performing noise search based on the matched filtered signals, to obtain the first power of the additive white Gaussian noise added to the matched filtered signals at the bit error rate threshold.

4. The method according to claim 3, wherein the performing noise search based on the matched filtered signals, to obtain the first power of the additive white Gaussian noise added to the matched filtered signals at the bit error rate threshold comprises:

   adding the additive white Gaussian noise to the matched filtered signals, to obtain signals to which the additive white Gaussian noise is added;
   performing equalization on the signals to which the additive white Gaussian noise is added, to obtain equalized signals; and
   determining, based on the equalized signals, the first power of the additive white Gaussian noise added to the matched filtered signals at the bit error rate threshold.

5. The method according to claim 4, wherein before the performing pulse shaping and matched filtering on the plurality of digital signals, the method further comprises:
performing low-pass filtering on the plurality of digital signals, wherein a bandwidth for performing low-pass filtering is determined based on a bandwidth of the coherent receiver front end.

6. The method according to any one of claims 1 to 4, wherein the obtaining the plurality of digital signals carried in the dual-polarization optical signal from the coherent transmitter comprises:

   obtaining a plurality of analog signals carried in the dual-polarization optical signal from the coherent transmitter;
   performing low-pass filtering on the plurality of analog signals, to obtain low-pass filtered analog signals, wherein a bandwidth for performing low-pass filtering is determined based on a bandwidth of the coherent receiver front end; and
   performing analog-to-digital conversion on the low-pass filtered analog signals, to obtain the plurality of digital signals.

7. The method according to any one of claims 2 to 5, wherein the determining the performance of the coherent transmitter based on the first power, the second power, and the noise of the coherent receiver front end comprises:

determining a transmitter constellation closure penalty according to a formula $TCC = 10\log_{10}\left(\dfrac{\sigma_{ideal}^2}{\sigma_{TUT}^2 + \sigma_s^2}\right)$,

wherein $TCC$ represents the transmitter constellation closure penalty, $\sigma_{TUT}^2$ represents the first power, $\sigma_{ideal}^2$ represents the second power, $\sigma_s^2$ represents power of the noise of the coherent receiver front end, and the transmitter constellation closure penalty represents the performance of the coherent transmitter.

8. The method according to any one of claims 3 to 5, wherein the method further comprises:

   determining power of the plurality of digital signals and power of the matched filtered signals; and
   the determining the performance of the coherent transmitter based on the first power, the second power, and the noise of the coherent receiver front end comprises:
determining a transmitter constellation closure penalty according to a formula

$$TCC = 10\log_{10}\left(\frac{\sigma_{ideal}^2}{\sigma_{TUT}^2 + \sigma_s^2}\right) + 10\log_{10}\left(\frac{p_{unfiltered}}{p_{filtered}}\right)$$ , wherein *TCC* represents the transmitter constella-

tion closure penalty, $\sigma_{TUT}^2$ represents the first power, $\sigma_{ideal}^2$ represents the second power, $\sigma_s^2$ represents power of the noise of the coherent receiver front end, $p_{unfiltered}$ represents the power of the plurality of digital signals, $p_{filtered}$ represents the power of the matched filtered signals, and the transmitter constellation closure penalty represents the performance of the coherent transmitter.

9. The method according to any one of claims 1 to 8, wherein the dual-polarization optical signal comprises at least $1 \times 10^5$ symbols at the bit error rate threshold.

10. The method according to claim 2, wherein the determining the performance of the coherent transmitter based on the first power, the second power, and the noise of the coherent receiver front end comprises:

determining a first sensitivity penalty of the coherent transmitter at the bit error rate threshold based on the first power, the second power, and the noise of the coherent receiver front end; and
the method further comprises:

performing noise search based on the plurality of digital signals, to obtain third power of additive white Gaussian noise added to the plurality of digital signals at at least one target bit error rate;
obtaining fourth power of additive white Gaussian noise added to the ideal signal at the at least one target bit error rate;
for a first target bit error rate in the at least one target bit error rate, determining a second sensitivity penalty of the coherent transmitter at the first target bit error rate based on third power and fourth power that correspond to the first target bit error rate and the noise of the coherent receiver front end; and
determining target performance of the coherent transmitter based on a first sensitivity penalty of the coherent transmitter and a second sensitivity penalty of the coherent transmitter at the at least one target bit error rate.

11. The method according to any one of claims 2 to 5, 7, 8, and 10, wherein the determining the performance of the coherent transmitter based on the first power, the second power, and the noise of the coherent receiver front end comprises:

determining the transmitter constellation closure penalty of the coherent transmitter based on the first power, the second power, and the noise of the coherent receiver front end; and
the method further comprises:

obtaining a bit error rate of the plurality of digital signals at at least one virtual noise signal-to-noise ratio; and
determining the target performance of the coherent transmitter based on the obtained bit error rate and the transmitter constellation closure penalty.

12. The method according to claim 1, wherein the determining the performance of the coherent transmitter based on the first power and the second power comprises:

determining, based on the first power and the second power, a first relative virtual noise signal-to-noise ratio of the coherent transmitter at the bit error rate threshold; and
the method further comprises:

performing noise search based on the plurality of digital signals, to obtain third power of additive white Gaussian noise added to the plurality of digital signals at at least one target bit error rate;
obtaining fourth power of additive white Gaussian noise added to the ideal signal at the at least one target bit error rate;
for a first target bit error rate in the at least one target bit error rate, determining a second relative virtual noise signal-to-noise ratio of the coherent transmitter at the first target bit error rate based on third power and fourth power that correspond to the first target bit error rate; and
determining target performance of the coherent transmitter based on a first relative virtual noise signal-to-noise ratio of the coherent transmitter and a second relative virtual noise signal-to-noise ratio of the coherent transmitter at the at least one target bit error rate.

13. A method for determining performance of a coherent transmitter, wherein the method comprises:

obtaining a plurality of digital signals carried in a dual-polarization optical signal from the coherent transmitter, wherein the plurality of digital signals are dual-polarization in-phase and quadrature signals;
obtaining a bit error rate of the plurality of digital signals at at least one virtual noise signal-to-noise ratio; and
determining the performance of the coherent transmitter based on the obtained bit error rate.

14. An apparatus for determining performance of a coherent transmitter, wherein the apparatus comprises an analog-to-digital conversion module and a digital signal processing module;

the analog-to-digital conversion module is configured to obtain a plurality of digital signals carried in a dual-polarization optical signal from the coherent transmitter; and
the digital signal processing module is configured to:

perform noise search based on the plurality of digital signals, to obtain first power of additive white Gaussian noise added to the plurality of digital signals at a bit error rate threshold;
obtain second power of additive white Gaussian noise added to an ideal signal at the bit error rate threshold, wherein the ideal signal is an undistorted signal determined based on the plurality of digital signals; and
determine the performance of the coherent transmitter based on the first power and the second power.

15. The method according to claim 14, wherein the digital signal processing module is configured to:
determine the performance of the coherent transmitter based on the first power, the second power, and noise of a coherent receiver front end.

16. The apparatus according to claim 15, wherein the digital signal processing module is configured to: perform pulse shaping and matched filtering on the plurality of digital signals to obtain matched filtered signals; and
perform noise search based on the matched filtered signals, to obtain the first power of the additive white Gaussian noise added to the plurality of digital signals at the bit error rate threshold.

17. The apparatus according to claim 16, wherein the digital signal processing module is configured to:

add additive white Gaussian noise to the matched filtered signals, to obtain signals to which the additive white Gaussian noise is added;
perform equalization on the signals to which the additive white Gaussian noise is added, to obtain equalized signals; and
determine, based on the equalized signals, first power of the additive white Gaussian noise added to the matched filtered signals at the bit error rate threshold.

18. The apparatus according to claim 17, wherein the digital signal processing module is further configured to:
perform low-pass filtering on the plurality of digital signals before performing pulse shaping and matched filtering on the plurality of digital signals, wherein a bandwidth for performing low-pass filtering is determined based on a bandwidth of the coherent receiver front end.

19. The apparatus according to any one of claims 14 to 18, wherein the analog-to-digital conversion module is configured to:

obtain a plurality of analog signals carried in the dual-polarization optical signal from the coherent transmitter;
perform low-pass filtering on the plurality of analog signals, to obtain low-pass filtered analog signals, wherein a bandwidth for performing low-pass filtering is determined based on the bandwidth of the coherent receiver front end; and
perform analog-to-digital conversion on the low-pass filtered analog signals, to obtain the plurality of digital signals.

20. The apparatus according to any one of claims 15 to 18, wherein the digital signal processing module is configured to:

    determine a transmitter constellation closure penalty according to a formula $TCC = 10\log_{10}\left(\dfrac{\sigma_{ideal}^2}{\sigma_{TUT}^2 + \sigma_s^2}\right)$,

    wherein *TCC* represents the transmitter constellation closure penalty, $\sigma_{TUT}^2$ represents the first power, $\sigma_{ideal}^2$ represents the second power, $\sigma_s^2$ represents power of the noise of the coherent receiver front end, and the transmitter constellation closure penalty represents the performance of the coherent transmitter.

21. The apparatus according to any one of claims 16 to 18, wherein the digital signal processing module is further configured to:

    determine power of the plurality of digital signals and power of the matched filtered signals; and
    the digital signal processing module is configured to:
    determine a transmitter constellation closure penalty according to a formula

    $$TCC = 10\log_{10}\left(\frac{\sigma_{ideal}^2}{\sigma_{TUT}^2 + \sigma_s^2}\right) + 10\log_{10}\left(\frac{p_{unfiltered}}{p_{filtered}}\right)$$, wherein TCC represents the transmitter constella-

    tion closure penalty, $\sigma_{TUT}^2$ represents the first power, $\sigma_{ideal}^2$ represents the second power, $\sigma_s^2$ represents power of the noise of the coherent receiver front end, $p_{unfiltered}$ represents the power of the plurality of digital signals, $p_{filtered}$ represents the power of the matched filtered signals, and the transmitter constellation closure penalty represents the performance of the coherent transmitter.

22. The apparatus according to any one of claims 14 to 21, wherein the dual-polarization optical signal comprises at least $1 \times 10^5$ symbols at the bit error rate threshold.

23. The apparatus according to claim 15, wherein the digital signal processing module is configured to:

    determine a first sensitivity penalty of the coherent transmitter at the bit error rate threshold based on the first power, the second power, and the noise of the coherent receiver front end; and
    the digital signal processing module is further configured to:

    perform noise search based on the plurality of digital signals, to obtain third power of additive white Gaussian noise added to the plurality of digital signals at at least one target bit error rate;
    obtain fourth power of additive white Gaussian noise added to the ideal signal at the at least one target bit error rate;
    for a first target bit error rate in the at least one target bit error rate, determine a second sensitivity penalty of the coherent transmitter at the first target bit error rate based on third power and fourth power that correspond to the first target bit error rate and the noise of the coherent receiver front end; and
    determine target performance of the coherent transmitter based on a first sensitivity penalty of the coherent transmitter and a second sensitivity penalty of the coherent transmitter at the at least one target bit error rate.

24. The apparatus according to any one of claims 15 to 18, 20, 21, and 23, wherein the determining the performance of the coherent transmitter based on the first power, the second power, and the noise of the coherent receiver front end comprises:

    determining the transmitter constellation closure penalty of the coherent transmitter based on the first power, the second power, and the noise of the coherent receiver front end; and
    the digital signal processing module is further configured to:

    obtain a bit error rate of the plurality of digital signals at at least one virtual noise signal-to-noise ratio; and
    determine the target performance of the coherent transmitter based on the obtained bit error rate and the transmitter constellation closure penalty.

25. The apparatus according to claim 14, wherein the digital signal processing module is configured to:

   determine, based on the first power and the second power, a first relative virtual noise signal-to-noise ratio of the coherent transmitter at the bit error rate threshold; and
   the digital signal processing module is further configured to:

   perform noise search based on the plurality of digital signals, to obtain third power of additive white Gaussian noise added to the plurality of digital signals at at least one target bit error rate;
   obtain fourth power of additive white Gaussian noise added to the ideal signal at the at least one target bit error rate;
   for a first target bit error rate in the at least one target bit error rate, determine a second relative virtual noise signal-to-noise ratio of the coherent transmitter at the first target bit error rate based on third power and fourth power that correspond to the first target bit error rate; and
   determine target performance of the coherent transmitter based on a first relative virtual noise signal-to-noise ratio of the coherent transmitter and a second relative virtual noise signal-to-noise ratio of the coherent transmitter at the at least one target bit error rate.

26. An apparatus for determining performance of a coherent transmitter, wherein the apparatus comprises an analog-to-digital conversion module and a digital signal processing module;

   the analog-to-digital conversion module is configured to obtain a plurality of digital signals carried in a dual-polarization optical signal from the coherent transmitter, wherein the plurality of digital signals are dual-polarization in-phase and quadrature signals; and
   the digital signal processing module is configured to:

   obtain a bit error rate of the plurality of digital signals at at least one virtual noise signal-to-noise ratio; and
   determine the performance of the coherent transmitter based on the obtained bit error rate.

27. A system for determining performance of a coherent transmitter, wherein the system comprises a coherent receiving apparatus and the apparatus according to any one of claims 14 to 25; or the system comprises a coherent receiving apparatus and the apparatus according to claim 26; and
   the coherent receiving apparatus is configured to coherently receive a dual-polarization optical signal from the coherent transmitter, to obtain a plurality of analog signals; and output the plurality of analog signals to the apparatus according to any one of claims 14 to 25 or the apparatus according to claim 26, wherein the plurality of analog signals are converted into a plurality of digital signals through analog-to-digital conversion.

28. A communication system, wherein the communication system comprises a coherent transmitter configured to transmit a dual-polarization optical signal and the system according to claim 27.

29. A compute device, wherein the compute device comprises a processor and a memory, wherein

   the memory stores computer instructions; and
   the processor executes the computer instructions, to cause the compute device to perform the method according to any one of claims 1 to 12 or the method according to claim 13.

30. A computer-readable storage medium, wherein the computer-readable storage medium stores computer instructions, and when the computer instructions in the computer-readable storage medium are executed by a compute device, the compute device is caused to perform the method according to any one of claims 1 to 12 or the method according to claim 13.

FIG. 1

FIG. 2

| Obtain a plurality of digital signals carried in a dual-polarization optical signal from a coherent transmitter, where the plurality of digital signals are dual-polarization in-phase and quadrature signals | ⟩— 301 |

| Perform noise search based on the plurality of digital signals, to obtain first power of additive white Gaussian noise added to the plurality of digital signals at a bit error rate threshold | ⟩— 302 |

| Obtain second power of additive white Gaussian noise added to an ideal signal at the bit error rate threshold | — 303 |

| Determine performance of the coherent transmitter based on the first power and the second power | — 304 |

FIG. 3

FIG. 4

FIG. 5

FIG. 6

FIG. 7

FIG. 8

FIG. 9

FIG. 10

FIG. 11

## INTERNATIONAL SEARCH REPORT

| International application No. |
| --- |
| **PCT/CN2024/106389** |

**A.    CLASSIFICATION OF SUBJECT MATTER**

H04B17/15(2015.01)i

According to International Patent Classification (IPC) or to both national classification and IPC

**B.    FIELDS SEARCHED**

Minimum documentation searched (classification system followed by classification symbols)

IPC:H04B,H04L

Documentation searched other than minimum documentation to the extent that such documents are included in the fields searched

Electronic data base consulted during the international search (name of data base and, where practicable, search terms used)

CNTXT, ENTXTC, WPABSC, 3GPP, CJFD, CNKI: 白噪声, 发射机, 高斯白噪声, 误码率, 相干, 相干发射机, 信噪比, 性能, 噪声, BER, noise, transmitter, Signal-to-noise ratio, bit error rate, transmit+

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115441944 A (HUAWEI TECHNOLOGIES CO., LTD.) 06 December 2022 (2022-12-06) description, paragraphs [0078]-[0111], and figure 4 | 1-30 |
| A | CN 114665976 A (NANJING DING PHOTOELECTRIC TECHNOLOGY CO., LTD.) 24 June 2022 (2022-06-24) description, paragraphs [0030]-[0031], and figure 2 | 13, 26 |
| A | CN 109802730 A (ROHDE & SCHWARZ GMBH & CO. KG) 24 May 2019 (2019-05-24) entire document | 1-30 |
| A | CN 116016073 A (YANGTZE DELTA REGION INSTITUTE (HUZHOU), UNIVERSITY OF ELECTRONIC SCIENCE AND TECHNOLOGY OF CHINA) 25 April 2023 (2023-04-25) entire document | 1-30 |
| A | JP 2022039496 A (NTT DOCOMO, INC.) 10 March 2022 (2022-03-10) entire document | 1-30 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 September 2024** | **30 September 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/106389**

| Patent document cited in search report | | | Publication date (day/month/year) | Patent family member(s) | | | Publication date (day/month/year) |
|---|---|---|---|---|---|---|---|
| CN | 115441944 | A | 06 December 2022 | CA | 3149781 | A1 | 04 March 2021 |
| | | | | WO | 2021036220 | A1 | 04 March 2021 |
| | | | | CN | 112448760 | A | 05 March 2021 |
| | | | | KR | 20220050962 | A | 25 April 2022 |
| | | | | US | 2022182139 | A1 | 09 June 2022 |
| | | | | EP | 4020843 | A1 | 29 June 2022 |
| | | | | CN | 112448760 | B | 29 July 2022 |
| | | | | EP | 4020843 | A4 | 26 October 2022 |
| | | | | JP | 2022546405 | W | 04 November 2022 |
| | | | | JP | 7292502 | B2 | 16 June 2023 |
| | | | | KR | 102650392 | B1 | 21 March 2024 |
| | | | | US | 11962344 | B2 | 16 April 2024 |
| CN | 114665976 | A | 24 June 2022 | None | | | |
| CN | 109802730 | A | 24 May 2019 | EP | 3486666 | A1 | 22 May 2019 |
| | | | | EP | 3486666 | B1 | 28 July 2021 |
| | | | | EP | 3486666 | B8 | 08 September 2021 |
| | | | | US | 10256924 | B1 | 09 April 2019 |
| | | | | CN | 109802730 | B | 05 April 2022 |
| CN | 116016073 | A | 25 April 2023 | None | | | |
| JP | 2022039496 | A | 10 March 2022 | None | | | |

Form PCT/ISA/210 (patent family annex) (July 2022)

**EP 4 761 148 A1**

**Patent documents cited in the description**

- CN 202311292193
- CN 202410941831